(19) **Europäisches Patentamt European Patent Office Office européen des brevets**

(11) **EP 3 965 310 B1**

(12) **EUROPEAN PATENT SPECIFICATION**

(45) Date of publication and mention of the grant of the patent:
**17.09.2025 Bulletin 2025/38**

(21) Application number: **20799390.8**

(22) Date of filing: **22.04.2020**

(51) International Patent Classification (IPC):
*H04L 5/00* (2006.01)    *H04B 7/06* (2006.01)
*H04B 7/08* (2006.01)    *H04B 17/318* (2015.01)
*H04B 17/345* (2015.01)    *H04W 24/08* (2009.01)
*H04W 24/10* (2009.01)    *H04B 17/336* (2015.01)

(52) Cooperative Patent Classification (CPC):
**H04B 7/06952; H04B 7/088; H04B 17/318; H04B 17/345; H04L 5/0023; H04L 5/0048; H04W 24/08; H04W 24/10;** H04B 17/336; H04L 5/0057

(86) International application number:
**PCT/CN2020/086141**

(87) International publication number:
**WO 2020/221080 (05.11.2020 Gazette 2020/45)**

(54) **CHANNEL MEASUREMENT METHOD AND APPARATUS**

VERFAHREN UND VORRICHTUNG ZUR KANALMESSUNG

PROCÉDÉ ET APPAREIL DE MESURE DE CANAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.04.2019 CN 201910364310**

(43) Date of publication of application:
**09.03.2022 Bulletin 2022/10**

(73) Proprietor: **ZTE Corporation Shenzhen 518057 (CN)**

(72) Inventors:
- **XIAO, Huahua Shenzhen, Guangdong 518057 (CN)**
- **GAO, Bo Shenzhen, Guangdong 518057 (CN)**
- **ZHANG, Shujuan Shenzhen, Guangdong 518057 (CN)**
- **LU, Zhaohua Shenzhen, Guangdong 518057 (CN)**
- **JIANG, Chuangxin Shenzhen, Guangdong 518057 (CN)**

(74) Representative: **Vossius & Partner Patentanwälte Rechtsanwälte mbB Siebertstraße 3 81675 München (DE)**

(56) References cited:
**EP-A1- 3 471 318      EP-A1- 3 910 824
EP-A1- 3 910 995      CN-A- 103 825 663
CN-A- 104 202 712      CN-A- 107 734 514
CN-A- 108 540 178      CN-A- 110 535 515
US-A1- 2017 244 533**

- **QUALCOMM INCORPORATED: "Maintenance for CSI Measurement", vol. RAN WG1, no. Busan, Korea; 20180521 - 20180525, 20 May 2018 (2018-05-20), XP051442531, Retrieved from the Internet <URL:http://www.3gpp.org/ftp/Meetings %5F3GPP%5FSYNC/RAN1/Docs/> [retrieved on 20180520]**
- **SAMSUNG: "New MAC CEs for NR MIMO", vol. RAN WG2, no. Athens, Greece; 20180226 - 20180302, 14 February 2018 (2018-02-14), XP051399173, Retrieved from the Internet <URL:http://www.3gpp.org/ftp/tsg%5Fran/WG2% 5FRL2/TSGR2%5F101/Docs/> [retrieved on 20180214]**

**(Cont. next page)**

- **ZTE: "Feature lead summary on CSI measurement", vol. RAN WG1, no. Chengdu, China; 20181008 - 20181012, 9 October 2018 (2018-10-09), XP051519182, Retrieved from the Internet <URL:http://www.3gpp.org/ftp/tsg% 5Fran/WG1%5FRL1/TSGR1%5F94b/Docs/R1% 2D1811858%2Ezip> [retrieved on 20181009]**

**Description**

TECHNICAL FIELD

The present application relates to a wireless communication network, for example, a channel measurement method and apparatus.

BACKGROUND

In the field of wireless communications, a path loss increases as a carrier frequency increases. In particular, the path loss has a larger effect on performance in high-frequency communications. For coverage to be ensured, a multi-element array antenna is generally adopted to obtain a beamforming gain for compensating for the effect of the path loss. For a beam gain to be obtained, an optimal beam matching a channel of a terminal needs to be selected according to the channel where the terminal is located.

In Release 15 of a New Radio Access Technology (NR) of the 5th generation mobile communications (5G), a method for selecting a beam based on reference signal received power (RSRP) is used, that is, a beam with the highest received power is used as a transmit or receive beam of a user. However, considering an effect of interference in the same frequency, the beam cannot be accurately selected by the method based on the RSRP in a scenario where the interference has a relatively large effect.

3GPP R1-1807339 relates to a maintenance for CSI measurements.

3GPP R2-1802418 relates to new MAC CEs for NR MIMO.

3GPP R1-1811858 relates to maintenance of CSI measurement.

SUMMARY

The invention is specified by the independent claims. Preferred embodiments are defined in the dependent claims. In the following description, although numerous features may be designated as optional, it is nevertheless acknowledged that all features comprised in the independent claims are not to be read as optional.

The present application provides a channel measurement method and apparatus so that a base station can select an optimal beam to establish a communication connection with a terminal, an effect of interference in beam management can be better reflected, and a better beam can be selected, thereby improving system performance.

An embodiment of the present application provides a channel measurement method. The method includes steps described below.

Measurement resource information is configured, where the measurement resource information is used for acquiring channel state information and includes N pieces of channel measurement resource information and M pieces of interference measurement resource information, where N and M are positive integers.

The measurement resource information is sent.

An embodiment of the present application provides a channel measurement method. The method includes steps described below.

Measurement resource information is received, where the measurement resource information includes N pieces of channel measurement resource information and M pieces of interference measurement resource information, where N and M are positive integers.

Channel state information is acquired according to the measurement resource information, where the channel state information includes a channel-related parameter and/or an interference-related parameter.

The channel state information is transmitted to a base station.

An embodiment of the present application provides a method for determining a spatial receive parameter. The method includes steps described below.

Pieces of group information associated with A types of channels and/or signals are determined.

At least one of the following is determined according to the determined pieces of group information associated with the A types of channels and/or signals: a spatial receive parameter of at least one type of channel and/or signal of the A types of channels and/or signals, or a transmission manner of the A types of channels and/or signals.

An intersection between time domain resources occupied by the A types of channels and/or signals is non-empty, and A is a positive integer greater than or equal to 2.

An embodiment of the present application provides a channel measurement apparatus. The apparatus includes a configuration module and a sending module.

The configuration module is configured to configure measurement resource information, where the measurement resource information is used for acquiring channel state information and includes N pieces of channel measurement resource information and M pieces of interference measurement resource information, where N and M are positive integers.

The sending module is configured to send the measurement resource information.

An embodiment of the present application provides a channel measurement apparatus. The apparatus includes a receiving module, a measurement module and a sending module.

The receiving module is configured to receive measurement resource information, where the measurement resource information includes N pieces of channel measurement resource information and M pieces of interference measurement resource information, where N and M are positive integers.

The measurement module is configured to acquire channel state information according to the measurement resource information, where the channel state information includes a channel-related parameter and/or an interference-related parameter.

The sending module is configured to transmit the channel state information to a base station.

An embodiment of the present application provides an apparatus for determining a spatial receive parameter. The apparatus includes a group information determination module and a parameter determination module.

The group information determination module is configured to determine pieces of group information associated with A types of channels and/or signals.

The parameter determination module is configured to determine, according to the determined pieces of group information associated with the A types of channels and/or signals, at least one of the following: a spatial receive parameter of at least one type of channel and/or signal of the A types of channels and/or signals, or a transmission manner of the A types of channels and/or signals.

An intersection between time domain resources occupied by the A types of channels and/or signals is non-empty, and A is a positive integer greater than or equal to 2.

BRIEF DESCRIPTION OF DRAWINGS

FIG. 1 is a schematic diagram of a multi-beam transmission according to an embodiment;

FIG. 2 is a flowchart of a channel measurement method according to an embodiment;

FIG. 3 is a schematic diagram of an association relationship between channel measurement resources (CMRs) and interference measurement resources (IMRs) according to an embodiment;

FIG. 4 is a flowchart of another channel measurement method according to an embodiment;

FIG. 5 is a structure diagram of a channel measurement apparatus according to an embodiment;

FIG. 6 is a structure diagram of another channel measurement apparatus according to an embodiment;

FIG. 7 is a structure diagram of an apparatus for determining a spatial receive parameter according to an embodiment;

FIG. 8 is a structure diagram of a base station according to an embodiment; and

FIG. 9 is a structure diagram of a terminal according to an embodiment.

DETAILED DESCRIPTION

Embodiments of the present application are described hereinafter in detail with reference to drawings.

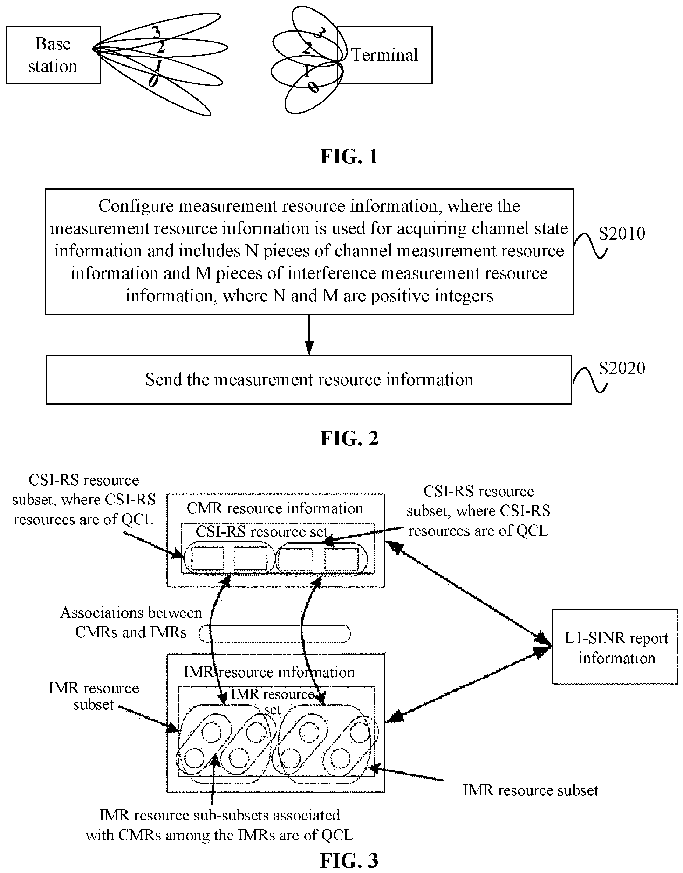

In a wireless communication technology, there is provided a scheme where multi-beam beamforming is performed through a multi-element array antenna to increase a beam gain and compensate for a path loss. As shown in FIG. 1, FIG. 1 is a schematic diagram of a multi-beam transmission according to an embodiment. In FIG. 1, multiple beams are implemented between a base station and a terminal through their respective multi-element array antennas. For the beam gain to be obtained, an optimal beam matching a channel of the terminal needs to be selected according to the channel where the terminal is located. A method for selecting a beam based on RSRP is used. However, due to the multi-beam beamforming between the base station and the terminal, another beam in the same frequency may interfere with the beam to be selected, thereby affecting the selection of the beam. Therefore, channel information and interference information of the beam need to be accurately measured, so as to implement the accurate selection of the beam according to a measurement result.

FIG. 2 is a flowchart of a channel measurement method according to an embodiment. As shown in FIG. 2, the method provided in this embodiment includes steps described below.

In step S2010, measurement resource information is configured, where the measurement resource information is used for acquiring channel state information and includes N pieces of channel measurement resource (CMR) information and M pieces of interference measurement resource (IMR) information, where N and M are positive integers.

The channel measurement method provided in this embodiment is applied to a base station in a wireless communication system, which is simply referred to as a base station. The base station allocates various transmission resources to a terminal and sends various kinds of configuration information to the terminal so that the terminal determines a resource used for a transmission and various measurement or transmission instructions to be executed.

When the multi-beam beamforming is implemented between the base station and the terminal through multi-element array antennas, the terminal needs to measure multiple beams formed at the base station and transmit states of the measured beams to the base station so that the base station selects a beam with a maximum gain as an optimal beam to establish a channel with the terminal for a data transmission. The terminal measures RSRP of the beams and feeds back the RSRP, that is, a beam with maximum received power is used as a beam used by the terminal. However, interference of another beam in the same frequency may affect the selection of the beam.

To solve the preceding problem, in this embodiment, the base station configures the measurement resource information, where the measurement resource information is used for acquiring the channel state information. The measurement resource information includes the N pieces of CMR information and the M pieces of IMR information, where N and M are positive integers. The base station configures the measurement resource information in a report configuration (report config) or a reporting setting. The N pieces of CMR information are used for the terminal to measure channel states of beams and the M pieces of IMR information are used for the terminal to measure interference on the beams.

The CMR information (CMR setting or CMR config) includes a CMR set and/or a CMR subset, where the channel measurement resource set includes at least one channel measurement resource subset, the channel measurement resource set includes at least one channel measurement resource, and the channel measurement resource subset includes at least one channel measurement resource. Channel measurement resources represent reference signal resources for channel measurement and include, but are not limited to, a channel state information-reference signal (CSI-RS) resource, a synchronization signal block (SSB) resource, a physical broadcast channel (PBCH) resource, an SSB/PBCH resource and an uplink sounding reference signal (SRS) resource. The CSI-RS resource is mainly a non-zero power channel state information-reference signal (NZP-CSI-RS) resource. When the channel measurement resource set includes only one channel measurement resource subset, the channel measurement resource information is the channel measurement resource set and otherwise may be the channel measurement resource subset.

In an embodiment of the present application, channel measurement resources in each channel measurement resource subset have the same spatial characteristic and/or channel measurement resources in different channel measurement resource subsets have different spatial characteristics.

A specific channel measurement resource configuration method is as follows: an I-th channel measurement resource set is divided into KI channel measurement resource subsets according to a predetermined manner such as the spatial characteristic, where KI is a positive integer and I = 1, ..., N. A channel measurement resource subset includes at least one channel measurement resource, channel measurement resources included in the channel measurement resource subset have the same spatial characteristic, and channel measurement resources in different channel measurement resource subsets have different spatial characteristics. For example, one channel measurement resource set is divided into K subsets, an i-th channel measurement resource subset includes Li channel measurement resources, channel measurement resources in an Li-th channel measurement resource subset have the same spatial characteristic, and a channel measurement resource in the Li-th channel measurement resource subset and a channel measurement resource in an Lj-th channel measurement resource subset have different spatial characteristics, where i, j = 1, ..., K, and i is not equal to j. Here, each channel measurement resource set may include a different number of channel measurement resource subsets or the same number of channel measurement resource subsets, and each channel measurement resource subset may include the same number of channel measurement resources or a different number of channel measurement resources. Channel measurement resource subsets in the channel measurement resource set may also be configured according to higher-layer signaling.

Identifies (IDs) of channel measurement resources included in the channel measurement resource set and/or the channel measurement resource subset are uniformly ordered or ordered overall so that the channel measurement resources included in the channel measurement resource set and/or the channel measurement resource subset have unique IDs which are not repetitive.

The IMR information (IMR setting or IMR config) includes at least one of an IMR set, an IMR subset or an IMR sub-subset. The interference measurement resource set includes at least one interference measurement resource subset, the interference measurement resource set includes at least one interference measurement resource, the interference measurement resource subset includes at least one interference measurement resource sub-subset, and the interference measurement resource sub-subset includes at least one interference measurement resource. Interference measurement resources represent reference signal resources for interference measurement and include, but are not limited to, a non-zero power channel state information-reference signal (NZP-CSI-RS) resource for interference measurement, a channel state information-interference measurement (CSI-IM) resource and a zero power channel state information-reference signal (ZP-CSI-RS) resource. The NZP-CSI-RS resource for interference measurement is configured with a sequence resource, that is, a measurement reference signal so that power of interference is obtained according to the measurement reference signal in the NZP-CSI-RS resource for interference measurement. The CSI-IM resource is configured with no sequence resource, that is, no measurement reference signal and power received on the CSI-IM resource is the power of interference. Generally, no parameters such as a quasi co-location are configured. For example, the IMR information includes M interference measurement resource sets, the M interference measurement resource sets include M1 interference measurement resource subsets in total, and/or the M interference measurement resource sets include M2 interference measurement resource sub-subsets in total. M1 and/or M2 are greater than 1. When the interference measurement resource set includes only one interference measurement resource subset, the interference measurement resource information is the interference measurement resource set and otherwise may be the interference measurement resource subset. If the interference measurement resource subset is divided into interference measurement resource sub-subsets, the interference measurement resource information is the interference measurement resource sub-subset.

In an embodiment of the present application, interference measurement resources in each interference measurement resource subset have the same spatial characteristic and/or interference measurement resources in different interference measurement resource subsets have different spatial characteristics.

A specific interference measurement resource configuration method is as follows: the interference measurement resource information includes the interference measurement resource set and/or the interference measurement resource subset and/or the interference measurement resource sub-subset; and when the interference measurement resource information is the interference measurement resource set, an l-th interference measurement resource set is divided into Ol interference measurement resource subsets according to the spatial characteristic, where Ol is a positive integer and l = 1, ..., M. The interference measurement resource subset includes at least one interference measurement resource, interference measurement resources included in the interference measurement resource subset have the same spatial characteristic, and interference measurement resources in different interference measurement resource subsets have different spatial characteristics. For example, the interference measurement resource set is divided into O subsets and an i-th interference measurement resource subset includes Li IMRs, where interference measurement resources in an Li-th interference measurement resource subset have the same spatial characteristic, and an interference measurement resource in the Li-th interference measurement resource subset and an interference measurement resource in an Lj-th interference measurement resource subset have different spatial characteristics, where i, j = 1, ..., K, and i is not equal to j. Here, each interference measurement resource set may include a different number of interference measurement resource subsets or the same number of interference measurement resource subsets, and the interference measurement resource subset may be divided into at least one interference measurement resource sub-subset.

IDs of interference measurement resources included in the interference measurement resource set and/or the interference measurement resource subset are uniformly ordered or ordered overall so that the interference measurement resources included in the interference measurement resource set and/or the interference measurement resource subset have unique IDs which are not repetitive.

For example, the N pieces of channel measurement resource information include at least one of specific configurations described below. A1: N channel measurement resource sets, where each channel measurement resource set includes at least one channel measurement resource and each channel measurement resource set includes only one channel measurement resource subset. A2: N channel measurement resource sets, where N = 1, each channel measurement resource set is divided into K channel measurement resource subsets, and each channel measurement resource subset includes at least one channel measurement resource sub-subset. A3: N channel measurement resource sets, where N > 1, an i-th channel measurement resource set is divided into Ki channel measurement resource subsets, and each channel measurement resource subset includes at least one channel measurement resource, where i = 1, ..., N.

M pieces of interference measurement information include at least one of specific configurations described below. B1: M interference measurement resource sets, each interference measurement resource set includes at least one interference measurement resource and each interference measurement resource set includes only one interference measurement resource subset. B2: M interference measurement resource sets, where M = 1, each interference measurement resource set is divided into O interference measurement resource subsets, and each interference measurement resource subset includes at least one interference measurement resource or each interference measurement resource subset is divided into at least one interference measurement resource sub-subset. B3: M interference measurement resource sets, where M > 1, an i-th interference measurement resource set is divided into Oi interference measurement resource subsets, and each interference measurement resource subset includes at least one interference measurement resource or each interference measurement resource subset is divided into at least one interference measurement resource sub-subset, where i = 1, ..., M.

One channel measurement resource set or one channel measurement resource subset in any one of configurations A1, A2 and A3 of the channel measurement resource information may be associated with one interference measurement resource set or one interference measurement resource subset or one interference measurement resource sub-subset in any one of configurations B1, B2 and B3 of the interference measurement resource information. In an embodiment, one channel measurement resource set in A1 is associated with one interference measurement resource set in B1; one channel measurement resource subset in A2 is associated with one interference measurement resource subset and/or one interference measurement resource sub-subset in B2; one channel measurement resource subset in A3 is associated with one interference measurement resource subset and/or one interference measurement resource sub-subset in B3; or one channel measurement resource subset in A2 is associated with one interference measurement resource subset and/or one interference measurement resource sub-subset in B3. Specifically, which channel measurement resource subset (set) is associated with or corresponds to which interference measurement resource subset (set) is predefined, configured by the bases station or determined via signaling, where the signaling includes physical layer signaling and/or higher-layer signaling.

FIG. 3 is a schematic diagram of an association relationship between CMRs and IMRs according to an embodiment.

In step S2020, the measurement resource information is sent.

After the measurement resource information is configured, the base station may send the measurement resource information to the terminal. The base station may send the measurement resource information to the terminal through any kind of downlink control channel.

After receiving the measurement resource information, the terminal may measure a channel and interference separately according to the N pieces of channel measurement resource information and the M pieces of interference measurement resource information included in the measurement resource information.

The terminal receives the N pieces of channel measurement resource information and the M pieces of interference measurement resource information configured by the base station, acquires information about associations between the N pieces of channel measurement resource information and the M pieces of interference measurement resource information, and calculates the channel state information by using the N pieces of channel measurement resource information and the M pieces of interference measurement resource information as well as an association relationship between the N pieces of channel measurement resource information and the M pieces of interference measurement resource information. For example, the channel state information is calculated by using a channel measurement resource in an i-th channel measurement resource subset and an interference measurement resource in a j-th interference measurement resource subset, where the i-th channel measurement resource subset (set) and the j-th interference measurement resource subset (set) have an association relationship, $i = 1, ..., N$, $j = 1, ..., M$, and N and M are the number of channel measurement resource subsets (sets) and the number of interference measurement resource subsets (sets), respectively.

Optionally, after sending the measurement resource information, the base station may further receive the channel state information sent by the terminal, where the channel state information includes a channel-related parameter and/or an interference-related parameter. When receiving the channel state information sent by the terminal, the base station may determine channel states and interference of beams emitted by the base station for the terminal, so that the base station may select the optimal beam to establish a communication connection with the terminal to implement the data transmission.

The base station receives various parameters measured and sent by the terminal, that is, the channel state information which includes the channel-related parameter and/or the interference-related parameter. The channel-related parameter is a parameter measured by the terminal in response to the channel measurement resource and the interference-related parameter is a parameter measured by the terminal in response to the interference measurement resource.

The channel state information includes at least one of a CSI-RS resource indicator (CRI), an interference measurement resource indicator (IMRI), a synchronization signal block resource indicator (SSBRI), RSRP, differential RSRP, an interference quality indicator (IQI) or a differential IQI. The interference quality indicator includes, but is not limited to, at least one of interference reference signal received power (IRSRP) or an L1-signal-to-interference-plus-noise ratio (L1-SINR). The differential IQI includes at least one of differential IRSRP (that is, a differential value between IRSRPi and the IRSRP or a differential of IRSRPi relative to the RSRP, where IRSRPi is obtained through an i-th piece of interference resource information) or a differential value between differential L1-SINRi and the L1-SINR, where L1-SINRi represents a ratio of average power of a resource corresponding to an i-th piece of channel measurement information to average received power of an interference measurement resource corresponding to an i-th piece of interference measurement information corresponding to the i-th piece of channel measurement information, such as a ratio of average received power of a CSI-RS resource in channel measurement information (including a channel measurement information set or a channel measurement information subset) to received power of the corresponding interference measurement information (where the received power of the interference measurement information includes average received power of one NZP CSI-RS or received power of one ZP CSI-RS or a sum of the average received power of one NZP CSI-RS and the received power of one ZP CSI-RS in an interference measurement information set or an interference measurement information subset or an interference measurement information sub-subset, and the NZP CSI-RS may be replaced with the SSB resource). The channel state information includes the channel-related parameter and the interference-related parameter, where the channel-related parameter includes at least one of the CRI, the SSBRI, the RSRP or the differential RSRP, and the interference-related parameter includes at least one of the IMRI, the IQI or the differential IQI.

A CRI with a value of i indicates an i-th CSI-RS resource, where i = 0, 1, ..., N, and N is the number of CSI-RS resources. An SSBRI with a value of i indicates an i-th SSB and/or PBCH resource, where i = 0, 1, ..., N1, and N1 is the number of SSB resources. An IMRI with a value of i indicates an i-th IMR, where i = 0, 1, ..., N1, and N1 is the number of IMRs.

According to the channel measurement method provided in this embodiment, the measurement resource information is first configured, where the measurement resource information is used for acquiring the channel state information and includes the N pieces of channel measurement resource information and the M pieces of interference measurement resource information, and N and M are positive integers, and then the measurement resource information is sent to the terminal so that the terminal can measure the channel and interference conditions of multiple beams generated by the base station, which can better reflect an effect of interference in beam management and make a better beam to be selected, so as to improve system performance.

In an embodiment, when the measurement resource information is configured, the association relationship between the N pieces of channel measurement resource information and the M pieces of interference measurement resource information may be further determined according to a preset rule. The association relationship between the N pieces of channel measurement resource information and the M pieces of interference measurement resource information may be preset in the base station or the terminal. If the association relationship is preset in the base station, the base station sends first signaling to the terminal after determining the association relationship, where the first signaling is used for determining the association relationship between the N pieces of channel measurement resource information and the M pieces of interference measurement resource information. The association relationship between the N pieces of channel measurement resource information and the M pieces of interference measurement resource information may also be referred to as the association relationship. The association relationship here includes at least one of the following: a value of one parameter is obtained according to a value of the other parameter; a value range of one parameter is obtained according to a value or a value range of the other parameter; some combinations of values of two parameters cannot appear at the same time; a parameter 2 associated with a parameter 1 is configured in configuration information of the parameter 1; or a relationship between two parameters is determined through the first signaling and/or a predetermined rule.

The predetermined rule is that channel measurement resource information and interference measurement resource information which have the same index have an association relationship, which specifically includes, but is not limited to, one of the following: an interference measurement resource subset and a channel measurement resource subset which have the same ID have an association relationship or a correspondence; an interference measurement resource sub-subset and a channel measurement resource subset which have the same ID have an association relationship or a correspondence; when an interference measurement resource sub-subset and a channel measurement resource subset have the same ID, the interference measurement resource sub-subset and a channel measurement resource have an association relationship or a correspondence; or an interference measurement resource set and a channel measurement resource set which have the same ID have an association relationship or a correspondence.

The predetermined rule is that the channel measurement resource information and the interference measurement resource information have an association relationship in one-to-one correspondence in order of index. Specifically, the predetermined rule includes, but is not limited to, an i-th interference measurement resource subset has an association relationship with an i-th channel measurement resource subset; an i-th interference measurement resource sub-subset has an association relationship with an i-th channel measurement resource subset; an i-th interference measurement resource sub-subset has an association relationship with an i-th channel measurement resource; or an i-th interference measurement resource set has an association relationship with an i-th channel measurement resource set, where i = 1, ..., N, and N is the number of pieces of channel measurement resource information or interference measurement resource information.

The predetermined rule is that the association relationship between the channel measurement resource information and the interference measurement resource information is determined according to spatial characteristics of the channel measurement resource information and the interference measurement resource information. That is, channel measurement resource information and interference measurement resource information which have the same spatial characteristic have an association relationship. The predetermined rule includes one of rules described below.

A channel measurement resource of the channel measurement resource information and an interference measurement resource of the interference measurement resource information which have the same spatial characteristic have an association relationship.

A channel measurement resource subset of the channel measurement resource information and an interference measurement resource subset of the interference measurement resource information which have the same spatial characteristic have an association relationship.

A channel measurement resource subset of the channel measurement resource information and an interference measurement resource sub-subset of the interference measurement resource information which have the same spatial characteristic have an association relationship.

A channel measurement resource set of the channel measurement resource information and an interference measurement resource set of the interference measurement resource information which have the same spatial characteristic have an association relationship.

A piece of channel measurement resource information and a piece of interference measurement resource information which have an association relationship can be sent or received simultaneously.

The association relationship and the correspondence are equivalent concepts and interchangeable herein.

The first signaling may be the higher-layer signaling and/or the physical layer signaling. The higher-layer signaling includes at least one of a resource information link list, a resource information link state or a resource information bitmap mapping. The first signaling is sent by the base station or received by the terminal, where the first signaling is used for determining the association relationship or correspondence between the channel measurement resource information and the interference measurement resource information.

The resource information link list (BeamManageStateList) includes at least one resource information link state (BeamManageState), where the resource information link state is used for determining an association relationship between one piece of channel measurement resource information and at least one piece of interference measurement resource information. Each resource information link state carries one of pieces of information described below.

An interference measurement resource subset and a channel measurement resource subset which respectively correspond to an interference measurement resource subset ID and a channel measurement resource subset ID carried in the resource information link state have an association relationship; an interference measurement resource sub-subset and a channel measurement resource subset which respectively correspond to an interference measurement resource sub-subset ID and a channel measurement resource subset ID carried in the resource information link state have an association relationship; an interference measurement resource sub-subset and a channel measurement resource which respectively correspond to an interference measurement resource sub-subset ID and a channel measurement resource ID carried in the resource information link state have an association relationship; or an interference measurement resource set and a channel measurement resource set which respectively correspond to an interference measurement resource set ID and a channel measurement resource set ID carried in the resource information link state have an association relationship.

In addition, if the number N of states included in the resource information link list is less than or equal to L, the selection of one resource information link from the resource information link list may be dynamically triggered via physical layer signaling. If the number of resource information link states included in the resource information link list is greater than L, L resource information link states need to be selected via media access control control element (MAC CE) signaling from N resource information link states, and one resource information link state is dynamically selected via physical layer signaling from the L resource information link states selected via the MAC CE. L is configured via higher-layer signaling.

A resource bitmap mapping (BeamManageBitmap) includes the association relationships of all the configured channel measurement resource information and interference measurement resource information. An i-th piece of channel measurement resource information and a j-th piece of interference measurement resource information correspond to an i-th row and a j-th column (or a j-th row and an i-th column) of a two-dimensional bitmap. The i-th row and the j-th column (or the j-th row and the i-th column) with a value v1 of bits indicate that the i-th piece of channel measurement resource information and the j-th piece of interference measurement resource information has an association, and the i-th row and the j-th column (or the j-th row and the i-th column) with a value v0 of bits indicate that the i-th piece of channel measurement resource information and the j-th piece of interference measurement resource information has no association, where v0 is 0, v1 is 1 or other agreed non-zero integers, i = 1, ..., N, j = 1, ..., M, and N and M are the number of pieces of channel measurement resource information and the number of pieces of interference measurement resource information, respectively. Here, if a first dimension of the bitmap is the interference measurement resource information, the i-th row and the j-th column need to be changed to the j-th row and the i-th column. Alternatively, the i-th piece of channel measurement resource information and the j-th piece of interference measurement resource information correspond to a K-th bit position (K = (i - 1) * M + j or K = (j - 1) * N + i) of a one-dimensional bitmap. The K-th bit position with a value of v1 indicates that the i-th piece of channel measurement resource information and the j-th piece of interference measurement resource information has an association, and the K-th bit position with a value of v0 indicates that the i-th piece of channel measurement resource information and the j-th piece of interference measurement resource information has no association, where v0 is 0, v1 is 1 or other agreed non-zero integers, i = 1, ..., N, j = 1, ..., M, and N and M are the number of pieces of channel measurement resource information and the number of pieces of interference measurement resource information, respectively. Here, if indexes i and j start from 0, K is expressed as K = i * M + j or K = j * N + i.

The step in which the association relationship or correspondence between the channel measurement resource information and the interference measurement resource information is determined via the first signaling includes, but is not limited to, that the BeamManageStateList is configured, where the BeamManageStateList includes at least one BeamManageState. Each BeamManageState is configured with one of pieces of information described below.

An interference measurement resource subset and a channel measurement resource subset which respectively correspond to an interference measurement resource subset ID and a channel measurement resource subset ID configured based on each BeamManageState have an association relationship.

An interference measurement resource sub-subset and a channel measurement resource subset which respectively correspond to an interference measurement resource sub-subset ID and a channel measurement resource subset ID configured based on each BeamManageState have an association relationship.

An interference measurement resource sub-subset and a channel measurement resource set which respectively correspond to an interference measurement resource sub-subset ID and a channel measurement resource subset ID configured based on each BeamManageState have an association relationship.

An interference measurement resource set and a channel measurement resource set which respectively correspond to an interference measurement resource set ID and a channel measurement resource set ID configured based on each BeamManageState have an association relationship.

The preceding association information or correspondence is mutual, that is, if an i-th piece of interference measurement resource information is associated with or corresponds to a j-th piece of channel measurement resource information, the j-th piece of channel measurement resource information is associated with or corresponds to the i-th piece of interference measurement resource information, where $i = 1, ..., N$, and $j = 1, ..., M$.

The preceding ID represents a set or a subset or a resource and is a non-negative integer.

The association relationship between the N pieces of channel measurement resource information and the M pieces of interference measurement resource information includes at least one of the following: a channel measurement resource of the channel measurement resource information and an interference measurement resource of the interference measurement resource information have an association relationship; a channel measurement resource subset of the channel measurement resource information and an interference measurement resource subset of the interference measurement resource information have an association relationship; a channel measurement resource subset of the channel measurement resource information and an interference measurement resource sub-subset of the interference measurement resource information have an association relationship; or a channel measurement resource set of the channel measurement resource information and an interference measurement resource set of the interference measurement resource information have an association relationship. The piece of channel measurement resource information and the piece of interference measurement resource information which have the association relationship are capable of being sent simultaneously, or the piece of channel measurement resource information and the piece of interference measurement resource information which have the association relationship have the same spatial characteristic.

The spatial characteristic includes at least one of a quasi co-location (QCL), a transmission configuration indication (TCI), a transmission configuration state, a QCL Type D, a receive spatial characteristic, a transmit spatial characteristic, a receive beam group, a transmit beam group, a receive beam, a transmit beam or a spatial receive (Rx) parameter. The same spatial characteristic refers to the same value of at least one of the preceding spatial characteristic parameters. In an embodiment, the spatial characteristic mainly includes the QCL Type D or the spatial Rx parameter.

That two reference signals satisfy a quasi co-location relationship with respect to one type of quasi co-location parameter includes at least one of the following: a quasi co-location parameter of one reference signal may be acquired according to a quasi co-location parameter of the other reference signal or the two reference signals have the same quasi co-location reference signal with respect to the one type of quasi co-location parameter. For example, a quasi co-location reference signal of CSI-RS1 with respect to the spatial receive parameter is CSI-RS3 and a quasi co-location reference signal of CSI-RS2 with respect to the spatial receive parameter is CSI-RS3. Then, CSI-RS1 and CSI-RS2 satisfy the quasi co-location relationship with respect to the spatial receive parameter.

In an embodiment, a spatial characteristic of a piece of interference measurement resource information is determined by a spatial characteristic of a piece of channel measurement resource information associated with the piece of interference measurement resource information. The interference measurement resource information here mainly includes at least one of an NZP CSI-RS resource, an NZP CSI-RS resource set, an NZP CSI-RS resource subset or an NZP CSI-RS resource sub-subset.

In an embodiment, a reference pilot corresponding to a spatial characteristic of a piece of interference measurement resource information is determined by a reference pilot corresponding to a spatial characteristic of a piece of channel measurement resource information associated with the piece of interference measurement resource information. For example, if a spatial characteristic of a piece of channel measurement resource information has a value of A and corresponds to a reference pilot B, a spatial characteristic of a piece of interference measurement resource information associated with the piece of channel measurement resource information also has the value of A and corresponds to the reference pilot B. That is, the spatial characteristic of the piece of interference measurement resource information has the same value and corresponds to the same reference pilot as the spatial characteristic of the piece of channel measurement resource information associated with the piece of interference measurement resource information. Specifically, for example, a spatial characteristic of a channel measurement resource subset has the same spatial receive parameter as an interference measurement resource subset or an interference measurement resource sub-subset associated with (corresponding to) the channel measurement resource subset.

In an embodiment, the channel measurement resource information includes a repetition parameter and the interference measurement resource information includes a repetition parameter.

The repetition parameter of the interference measurement resource information and the repetition parameter of the interference measurement resource information are determined in any one of the following manners: a repetition parameter of an interference measurement resource set is determined by a repetition parameter of a channel measurement resource set associated with the interference measurement resource set; a repetition parameter of an interference measurement resource subset is determined by a repetition parameter of a channel measurement resource subset associated with the interference measurement resource subset; a repetition parameter of an interference measurement resource sub-subset is determined by a repetition parameter of a channel measurement resource subset associated with an interference measurement resource subset; a repetition parameter of an interference measurement resource set and a repetition parameter of a channel measurement resource set associated with the interference measurement resource set are determined by an independent higher-layer parameter; a repetition parameter of an interference measurement resource subset and a repetition parameter of a channel measurement resource subset associated with the interference measurement resource subset are determined by an independent higher-layer parameter; or a repetition parameter of an interference measurement resource sub-subset and a repetition parameter of a channel measurement resource subset associated with the interference measurement resource sub-subset are determined by an independent higher-layer parameter.

For example, if a repetition parameter of a piece of channel measurement resource information is on, a repetition parameter of a piece of interference measurement resource information associated with the piece of channel measurement resource information is on. For example, values of repetition parameters of an interference measurement resource subset and/or an interference measurement resource sub-subset are determined according to a value of a repetition parameter of a channel measurement resource subset; or values of repetition parameters of an interference measurement resource subset and/or an interference measurement resource sub-subset are determined according to a value of a repetition parameter of a channel measurement resource.

Since the base station is ignorant of the total number of bits of the channel state information to be transmitted by the terminal when sending the measurement resource information to the terminal, the base station cannot accurately schedule an uplink resource. In addition, when transmitting the channel state information, the terminal further needs to transmit the channel-related parameter and the interference-related parameter, as well as channel state information (CSI)-related parameters other than the channel-related parameter and the interference-related parameter, and a hybrid automatic repeat request (HARQ) parameter. CSI other than the channel-related parameter and the interference-related parameter (where CSI parameters other than the channel-related parameter and the interference-related parameter are collectively referred to as channel quality-related parameters herein) includes, but is not limited to, at least one of a CQI, a precoding matrix indicator (PMI), the CRI, a layer indicator (LI) or a rank indicator (RI). After the terminal completes the detection of the channel state information, part of the channel state information needs to be discarded when all of the channel state information cannot be transmitted on the uplink resource.

Then, priorities of the channel state information need to be ordered, where priorities of CSI-related parameters include at least one of the follows described below.

A priority of the IQI is not higher than a priority of the RSRP.

A priority of the IMRI is not higher than a priority of the CRI or a priority of the SSBRI.

A priority of the IMRI is not lower than a priority of the RI.

A priority of the IMRI is not lower than a priority of the PMI.

A priority of the IMRI is not lower than a priority of the LI.

A priority of the IMRI is not lower than a priority of the CQI.

A priority of the IMRI is higher than a priority of the IQI and/or a priority of the differential IQI.

A priority of the IMRI is higher than a priority of the RSRP and/or a priority of the differential RSRP.

A priority of the RSRP is not lower than a priority of the IQI and/or a priority of the differential IQI.

A priority of the differential IQI is not higher than a priority of the differential RSRP.

A priority of the IQI and/or a priority of the differential IQI are higher than a priority of the RI and/or a priority of the LI.

A priority of the IQI and/or a priority of the differential IQI are higher than a priority of the PMI and/or a priority of the CQI.

The terminal encodes the CSI-related parameters according to the preceding priorities and may discard parameters with low priorities when an encoding rate cannot reach a system requirement until the encoding rate reaches the system requirement. The base station decodes the CSI-related parameters according to the preceding priorities. The step in which the channel state information sent by the terminal is received includes at least one of cases described below.

The CRI is received in the case where the IMRI is determined by the CRI.

The SSBRI is received in the case where the IMRI is determined by the SSBRI.

At least one CRI, at least one RSRP and/or at least one differential RSRP are received.

At least one CRI, at least one IQI and/or at least one differential IQI are received.

At least one CRI, at least one RSRP and/or at least one differential RSRP, and at least one IQI and/or at least one differential IQI are received.

At least one SSBRI, at least one RSRP and/or at least one differential RSRP are received.

At least one SSBRI, at least one IQI and/or at least one differential IQI are received.

At least one SSBRI, at least one RSRP and/or at least one differential RSRP, and at least one IQI and/or at least one differential IQI are received.

At least one IMRI, at least one RSRP and/or at least one differential RSRP are received.

At least one IMRI, at least one IQI and/or at least one differential IQI are received.

At least one IMRI, at least one RSRP and/or at least one differential RSRP, and at least one IQI and/or at least one differential IQI are received.

At least one CRI, at least one IMRI, at least one RSRP and/or at least one differential RSRP are received.

At least one CRI, at least one IMRI, at least one IQI and/or at least one differential IQI are received.

At least one CRI, at least one IMRI, at least one RSRP and/or at least one differential RSRP, and at least one IQI and/or at least one differential IQI are received.

In an embodiment, the step in which the channel state information sent by the terminal is received may include that the channel state information transmitted by the terminal through the uplink resource is received. The channel-related parameter and the interference-related parameter in the channel state information need to be encoded in a certain encoding manner so that the base station may implement decoding in a decoding manner corresponding to the terminal. The uplink resource includes a physical uplink channel and higher-layer signaling. The physical uplink channel includes at least one of a physical uplink shared channel (PUSCH), a physical uplink control channel (PUCCH) or a physical random-access channel (PRACH). The higher-layer signaling includes radio resource control (RRC) signaling and MAC CE signaling. The uplink resources here may all be used for transmitting the channel state information.

To facilitate the description of how to transmit the channel state information in a report, the channel state information needs to be encoded firstly. The number of bits of each variable in the channel state information needs to be determined before encoding. The number of bits of a parameter such as the CRI, the SSBRI or the RSRP has been determined in current standards, as shown in Table 1.

Table 1

| Value | Bit Width |
|---|---|
| CRI | $\left\lceil \log_2\left(K_s^{\mathrm{CSI-RS}}\right) \right\rceil$ |
| SSBRI | $\left\lceil \log_2\left(K_s^{\mathrm{SSB}}\right) \right\rceil$ |
| RSRP | 7 |
| Differential RSRP | 4 |

Here, $K_s^{\mathrm{CSI-RS}}$ denotes the number of CSI-RSs in a CSI-RS resource set where a CSI-RS is located, and $K_s^{\mathrm{SSB}}$ denotes the number of SS/PBCH blocks in an SS/PBCH resource set corresponding to an SS/PBCH.

Tables 2 and 3 illustrate the number of bits of each of the IMRI, the IQI and the differential IQI. The IMRI is not shown in Table 2 since the IMRI may be implicitly transmitted by the CRI.

Table 2

| Value | Bit Width |
|---|---|
| IQI | a |
| Differential IQI | b |

Table 3

| Value | Bit Width |
|---|---|
| IMRI | $\left\lceil \log_2\left(K_s^{IMR}\right)\right\rceil$ |
| IQI | a |
| Differential IQI | b |

Here, $K_s^{IMR}$ denotes the number of interference measurement resource subsets and/or the number of interference measurement resource sets, and a and b are positive integers. For example, a = 7 and b = 4.

Alternatively, bit widths of all the channel state information are combined into one table, Table 4.

Table 4

| Value | Bit Width |
|---|---|
| CRI | $\left\lceil \log_2\left(K_s^{\text{CSI–RS}}\right)\right\rceil$ |
| SSBRI | $\left\lceil \log_2\left(K_s^{\text{SSB}}\right)\right\rceil$ |
| IMRI | $\left\lceil \log_2\left(K_s^{IMR}\right)\right\rceil$ |
| IQI | a |
| Differential IQI | b |
| RSRP | 7 |
| Differential RSRP | 4 |

It is to be noted that if the IMRI is implicitly indicated by the CRI or the SSBRI, Table 4 is replaced with Table 5.

Table 5

| Value | Bit Width |
|---|---|
| CRI | $\left\lceil \log_2\left(K_s^{\text{CSI–RS}}\right)\right\rceil$ |
| SSBRI | $\left\lceil \log_2\left(K_s^{\text{SSB}}\right)\right\rceil$ |
| IQI | a |
| Differential IQI | b |
| RSRP | 7 |
| Differential RSRP | 4 |

After knowing transmission bits of the channel state information and their priorities, the channel state information may be encoded and the encoded channel state information may be transmitted in the uplink resource to the base station.

A specific method for encoding the channel state information may be performed in three manners described below.

(1) The channel-related parameter and the interference-related parameter in the channel state information are jointly encoded in one encoding block.

In this case, the uplink resource is the PUCCH, and the channel-related parameter and the interference-related parameter in the channel state information are jointly encoded. A specific encoding manner is shown in Table 6.

13

Table 6

| CSI Report No. | CSI fields |
|---|---|
| CSI report #n | CRI or SSBRI or IMIR #1 as shown in Tables 1 to 4, if reported |
| | CRI or SSBRI or IMIR #2 as shown in Tables 1 to 4, if reported |
| | CRI or SSBRI or IMIR #3 as shown in Tables 1 to 4, if reported |
| | CRI or SSBRI or IMIR #4 as shown in Tables 1 to 4, if reported |
| | RSRP #1 as shown in Table 1 or 4, if reported |
| | IQI #1 as shown in Tables 2 to 4, if reported |
| | Differential RSRP #2 as shown in Table 1 or 4, if reported |
| | Differential RSRP #3 as shown in Table 1 or 4, if reported |
| | Differential RSRP #4 as shown in Table 1 or 4, if reported |
| | Differential IQI #1 as shown in Tables 2 to 4, if reported |
| | Differential IQI #2 as shown in Tables 2 to 4, if reported |
| | Differential IQI #3 as shown in Tables 2 to 4, if reported |

(2) The channel-related parameter and the interference-related parameter in the channel state information are independently encoded in two encoding blocks.

In this case, the uplink resource is the PUCCH, and the channel-related parameter and the interference-related parameter in the channel state information are independently encoded, as shown in Tables 7 and 8. An encoding manner of the channel-related parameter is shown in Table 7. An encoding manner of the interference-related parameter is shown in Table 8.

Table 7

| CSI Report No. | CSI fields |
|---|---|
| CSI report #n | CRI or SSBRI #1 as shown in Table 1 or 4, if reported |
| | CRI or SSBRI #2 as shown in Table 1 or 4, if reported |
| | CRI or SSBRI #3 as shown in Table 1 or 4, if reported |
| | CRI or SSBRI #4 as shown in Table 1 or 4, if reported |
| | RSRP #1 as shown in Table 1 or 4, if reported |
| | Differential RSRP #2 as shown in Table 1 or 4, if reported |
| | Differential RSRP #3 as shown in Table 1 or 4, if reported |
| | Differential RSRP #4 as shown in Table 1 or 4, if reported |

Table 8

| CSI Report No. | CSI fields |
|---|---|
| CSI report #n | IMIR #1 as shown in Table 3 or 4, if reported |
| | IMIR #2 as shown in Table 3 or 4, if reported |
| | IMIR #3 as shown in Table 3 or 4, if reported |
| | IMIR #4 as shown in Table 3 or 4, if reported |
| | IQI #1 as shown in Tables 2 to 4, if reported |
| | Differential IQI #1 as shown in Tables 2 to 4, if reported |
| | Differential IQI #2 as shown in Tables 2 to 4, if reported |
| | Differential IQI #3 as shown in Tables 2 to 4, if reported |

(3) In the case where the channel state information includes the RSRP and the IQI, the RSRP is encoded in a first part of encoding blocks and the IQI is encoded in a wideband or subband portion of a second part of the encoding blocks. In the case where the channel state information includes the differential RSRP and the IQI, the differential RSRP is encoded in a first part of encoding blocks and the IQI is encoded in a wideband or subband portion of a second part of the encoding blocks. In the case where the channel state information includes the RSRP and the differential IQI, the RSRP is encoded in a first part of encoding blocks and the differential IQI is encoded in a wideband or subband portion of a second part of the encoding blocks. In the case where the channel state information includes the differential RSRP and the differential IQI, the differential RSRP is encoded in a first part of encoding blocks and the differential IQI is encoded in a wideband or subband portion of a second part of the encoding blocks. In the case where the channel state information includes the IQI and does not include the RSRP and/or the differential RSRP, the IQI is encoded in a first part of encoding blocks. In the case where the channel state information includes the differential IQI and does not include the RSRP and/or the differential RSRP, the differential IQI is encoded in a first part of encoding blocks. A transmission priority of the first part of encoding blocks is higher than a transmission priority of the second part of the encoding blocks. That is, after the terminal completes encoding, information encoded in the first part of encoding blocks is preferentially transmitted.

At least one of the CRI, the SSBRI or the IMIR is encoded in the first part of encoding blocks, as shown in Table 9, and at least one of the IQI, the RSRP, the differential IQI or the differential RSRP is encoded in the second part of the encoding blocks, as shown in Table 10.

Table 9

| CSI Report No. | CSI fields |
|---|---|
| CSI report<br><br>First part of encoding blocks #n | CRI or SSBRI or IMIR #1 as shown in Tables 1 to 4, if reported |
| | CRI or SSBRI or IMIR #2 as shown in Tables 1 to 4, if reported |
| | CRI or SSBRI or IMIR #3 as shown in Tables 1 to 4, if reported |
| | CRI or SSBRI or IMIR #4 as shown in Tables 1 to 4, if reported |
| | ... |
| | Other CSI parameters in the first part of encoding blocks, for example, at least one of the RI, the LI or a wideband CQI |

Table 10

| CSI Report No. | CSI fields |
|---|---|
| CSI report<br><br>Second part of encoding blocks #n | RSRP #1 as shown in Table 1 or 4, if reported |
| | IQI #1 as shown in Tables 2 to 4, if reported |
| | Differential RSRP #2 as shown in Table 1 or 4, if reported |
| | Differential RSRP #3 as shown in Table 1 or 4, if reported |
| | Differential RSRP #4 as shown in Table 1 or 4, if reported |
| | Differential IQI #1 as shown in Tables 2 to 4, if reported |
| | Differential IQI #2 as shown in Tables 2 to 4, if reported |
| | Differential IQI #3 as shown in Tables 2 to 4, if reported |
| | ... |
| | Other CSI parameters in the second part of encoding blocks, for example, at least one of a subband CQI, the PMI or the like |

It is to be noted that if only one of the IQI or the RSRP exists, the IQI or the RSRP may be encoded only in the first part of encoding blocks. The terminal encodes the channel state information in the manners shown in Tables 6 to 10. If other CSI parameters exist, the terminal may also encode the other CSI parameters, perform operations such as modulation and resource mapping on encoded data, and transmit the encoded data on the PUCCH to the base station. The base station receives the channel state information on the PUCCH and obtains beamforming-related parameters through a series of operations such as demodulation and decoding.

In addition, if the channel state information is transmitted on the PUSCH, there may be other encoding manners in addition to those in Tables 6 to 10, such as encoding manners shown in Tables 11 to 13. In Table 11, all the channel state information is encoded in the first part of encoding blocks in a CSI report. In Table 12, at least one of the CRI, the SSBRI, the IMRI, the RSRP or the differential RSRP is encoded in the first part of encoding blocks in the CSI report. Table 13 shows that at least one of the IQI or the differential IQI is encoded in the wideband portion of the second part of the encoding blocks in the CSI report.

Table 11

| CSI Report No. | CSI fields |
|---|---|
| CSI report #n<br><br>First part of encoding blocks for the CSI | CRI or SSBRI as shown in Table 1 or 4, if reported |
| | IMRI as shown in Table 3 or 4, if reported |
| | ...... |
| | Channel quality-related parameters to be reported, where the channel quality-related parameters include, but are not limited to, one of the wideband CQI, a subband differential CQI for a first transport block or a wideband non-zero PMI coefficient |
| | RSRP as shown in Table 1 or 4, if reported |
| | Differential RSRP as shown in Table 1 or 4, if reported |
| | IQI as shown in Tables 2 to 4, if reported |
| | Differential IQI as shown in Tables 2 to 4, if reported |

Table 12

| CSI Report No. | CSI fields |
|---|---|
| CSI report #n<br><br>First part of encoding blocks for the CSI | CRI or SSBRI as shown in Table 1 or 4, if reported |
| | IMRI as shown in Table 3 or 4, if reported |
| | ...... |
| | Channel quality-related parameters to be reported, where the channel quality-related parameters include, but are not limited to, one of the wideband CQI, the subband differential CQI for the first transport block or the wideband non-zero PMI coefficient |
| | RSRP as shown in Table 1 or 4, if reported |
| | Differential RSRP as shown in Table 1 or 4, if reported |

Table 13

| CSI Report No. | CSI fields |
|---|---|
| CSI report #n<br><br>Wideband portion of the second part of encoding blocks for the CSI | ...... |
| | Channel quality-related parameters to be reported, where the channel quality-related parameters include, but are not limited to, one of a wideband CQI for a second transport block, the PMI or the LI |
| | IQI as shown in Tables 2 to 4, if reported |
| | Differential IQI as shown in Tables 2 to 4, if reported |

That is, a transmission on the PUSCH includes one of characteristics described below.

Both the channel-related parameter and the interference-related parameter are jointly encoded in the first part of encoding blocks in the CSI report. Alternatively, at least one of the CRI, the SSBRI, the IMR, the RSRP or the differential RSRP is encoded in the first part of encoding blocks in the CSI report, and at least one of the IQI or the differential IQI is encoded in the wideband portion of the first part of encoding blocks in the CSI report or the subband portion of the first part of encoding blocks in the CSI report.

The terminal encodes the channel state information in the manners shown in Tables 6 to 13. If other CSI parameters exist, the terminal may also encode the other CSI parameters, perform operations such as modulation and resource mapping on encoded data, and transmit the encoded data on the PUSCH to the base station. The base station receives the channel state information on the PUSCH and obtains beamforming-related parameters through a series of operations such as demodulation and decoding.

It is to be noted that the terminal may encode the channel state information in the manners in Tables 6 to 13 and transmit a part of the channel state information on the PUCCH and the other part of the channel state information on the PUSCH or the higher-layer signaling.

It is to be noted that Tables 6 to 13 only show some embodiments of the encoding the channel state information and there may be other encoding manners in which the channel state information is combined or split arbitrarily, which are not exhaustively listed.

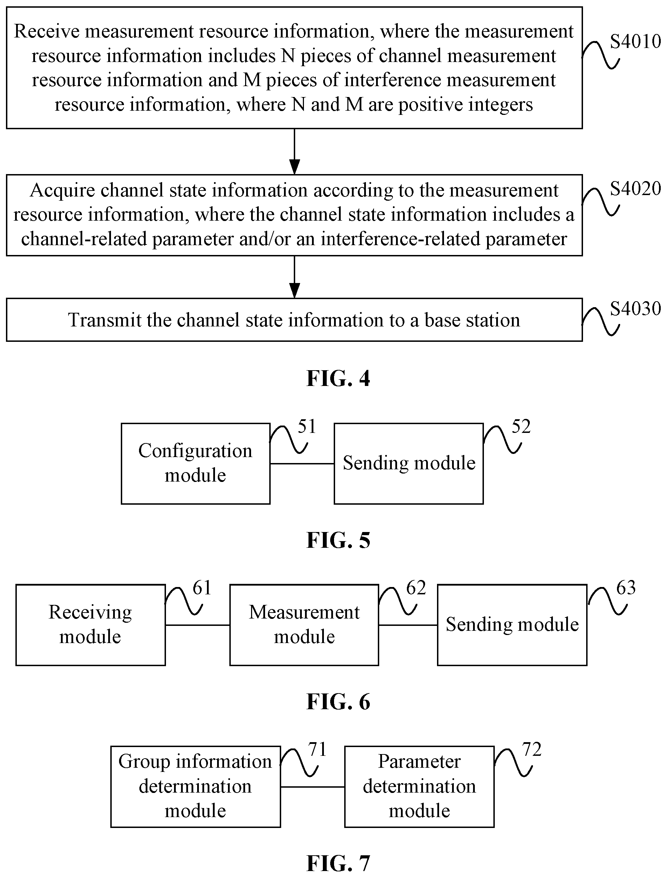

FIG. 4 is a flowchart of another channel measurement method according to an embodiment. As shown in FIG. 4, the method provided in this embodiment includes steps described below.

In step S4010, measurement resource information is received, where the measurement resource information includes N pieces of channel measurement resource information and M pieces of interference measurement resource information, where N and M are positive integers.

The channel measurement method provided in this embodiment is applied to a terminal device in a wireless communication system, which is simply referred to as a terminal. The terminal completes a data transmission according to a transmission resource allocated by a base station, receives various kinds of configuration information sent by the base station, determines a resource required for the transmission according to the various kinds of configuration information, and executes measurement instructions indicated by the various kinds of configuration information.

When the multi-beam beamforming is implemented between the base station and the terminal through multi-element array antennas, the terminal needs to measure multiple beams formed at the base station and transmit states of the measured beams to the base station so that the base station selects a beam with a maximum gain as an optimal beam to establish a channel with the terminal for the data transmission. The terminal measures RSRP of the beams and transmits the RSRP, that is, a beam with maximum received power is used as a beam used by the terminal. However, interference of another beam in the same frequency may affect the selection of the beam.

To solve the preceding problem, in this embodiment, the terminal receives the measurement resource information sent by the base station, where the measurement resource information includes the N pieces of channel measurement resource information and the M pieces of interference measurement resource information, where N and M are positive integers.

A specific meaning of the measurement resource information and specific meanings of and relationships between the N pieces of channel measurement resource information and the M pieces of interference measurement resource information in the measurement resource information have been described in detail in the embodiment shown in FIG. 2, which are not repeated here.

In step S4020, channel state information is acquired according to the measurement resource information, where the channel state information includes a channel-related parameter and/or an interference-related parameter.

After receiving the measurement resource information, the terminal may measure a channel and interference separately according to the N pieces of channel measurement resource information and the M pieces of interference measurement resource information included in the measurement resource information to acquire the channel state information, where the channel state information includes the channel-related parameter and/or the interference-related parameter.

A meaning of the channel state information and a relationship between the channel-related parameter and the interference-related parameter have been described in detail in the embodiment shown in FIG. 2, which are not repeated here.

In step S4030, the channel state information is transmitted to the base station.

After acquiring the channel state information, the terminal transmits the channel state information to the base station. The base station receives various parameters measured and sent by the terminal, that is, the channel state information which includes the channel-related parameter and/or the interference-related parameter. The channel-related parameter is a parameter measured by the terminal in response to a channel measurement resource and the interference-related parameter is a parameter measured by the terminal in response to an interference measurement resource. When receiving the channel state information sent by the terminal, the base station may determine channel states and interference of beams emitted by the base station for the terminal, so that the base station may select the optimal beam to establish a communication connection with the terminal to implement the data transmission.

For the embodiment shown in FIG. 4, compositions of and a relationship between the channel measurement resource and the interference measurement resource, compositions of and a relationship between the channel-related parameter and the interference-related parameter, how the base station transmits the channel state information to the base station, and a specific method for how to encode the channel state information have been described in detail in the preceding embodiments and are not repeated here.

It is to be noted that the embodiments of the present application are described by only using an example in which the base station configures the measurement resource information, sends the measurement resource information to the terminal, and receives the channel state information sent by the terminal, that is, the channel state information is transmitted through an uplink resource. However, in fact, the terminal also supports the beamforming so that for the base station and the terminal, channel state information may also be transmitted through a downlink resource, that is, the base station transmits the channel state information to the terminal so that the terminal selects an appropriate uplink beam. Specific methods are similar to the methods provided in the embodiments of the present application except that the uplink resource is replaced with the downlink resource. Those skilled in the art can implement a transmission of the channel state information on the downlink resource according to the channel measurement methods provided by the present application, which is not repeated in this embodiment.

In addition, when the same receiving end receives signals on the same symbol by using the same receive beam, channels or signal cannot be flexibly received according to channel characteristics corresponding to different transmission and reception points (TRPs) in the case of a joint transmission by multiple TRPs. Therefore, an embodiment of the present application further provides a method for determining a spatial receive parameter.

The method for determining the spatial receive parameter in the embodiment of the present application includes steps described below.

Pieces of group information associated with A types of channels and/or signals are determined.

At least one of the following is determined according to the determined pieces of group information associated with the A types of channels and/or signals: a spatial receive parameter of at least one type of channel and/or signal of the A types of channels and/or signals, or a transmission manner of the A types of channels and/or signals.

An intersection between time domain resources occupied by the A types of channels and/or signals is non-empty, and A is a positive integer greater than or equal to 2.

In the embodiment of the present application, the pieces of group information associated with the A types of channels and/or signals are determined, and the spatial receive parameter of the at least one type of channel and/or signal of the A types of channels and/or signals is determined according to the pieces of group information associated with the A types of channels and/or signals.

The step in which the spatial receive parameter of the at least one type of channel and/or signal of the A types of channels and/or signals is determined according to the determined pieces of group information associated with the A types of channels and/or signals includes at least one of steps described below.

In the case where the pieces of group information associated with the A types of channels and/or signals are the same, the A types of channels and/or signals satisfy a quasi co-location relationship with respect to the spatial receive parameter.

In the case where the pieces of group information associated with the A types of channels and/or signals are the same, the A types of channels and/or signals satisfy a quasi co-location relationship with respect to the spatial receive parameter on the intersection.

In the case where the pieces of group information associated with the A types of channels and/or signals are different, each type of channel and/or signal of the A types of channels and/or signals is associated with a spatial receive parameter.

In the case where the pieces of group information associated with the A types of channels and/or signals are different, each type of channel and/or signal of the A types of channels and/or signals is associated with a spatial receive parameter on the intersection.

In the following description with A = 2 as an example, the following relationship is satisfied when the pieces of group information associated with the A types of channels and/or signals are the same. If the pieces of group information associated with the A types of channels and/or signals are different, the following relationship does not need to be satisfied.

Case one: When an interval between downlink control information (DCI) for scheduling a physical downlink shared channel (PDSCH) and the PDSCH is less than a predetermined threshold, a time domain intersection between the PDSCH and a control resource set (CORESET) is non-empty (where the CORESET is configured to be time-frequency resource blocks for transmitting the downlink control information), the PDSCH and the CORESET have different 'OCL-TypeD's (i.e. spatial receive parameters), and the PDSCH and the CORESET are associated with the same piece of group information, a physical downlink control channel (PDCCH) in the CORESET is preferentially received. In this case, the 'QCL-TypeD' of the PDSCH is a 'QCL-TypeD' of a CORESET which is associated with at least one search space to be detected and has a minimum CORESETID in a time unit closest to the PDSCH and is in a carrier component (CC) where the PDSCH is located.

Case two: If a CSI-RS resource configured for a UE and a CORESET associated with a search space set has at least one same orthogonal frequency division multiplexing (OFDM) symbol, and the CSI-RS and the CORESET have the same group ID, the terminal assumes that the CSI-RS and demodulation reference signals (DMRSs) of all PDCCHs included in the CORESET associated with the search space set satisfy the quasi co-location relationship with respect to 'QCL-TypeD' if 'QCL-TypeD' is configured. This is also applicable to the case where the CSI-RS and the CORESET are in different intra-band component carriers.

Case three: If an intersection between OFDM time domain symbols occupied by an SS/PBCH resource block and a CSI-RS resource configured by the terminal is non-empty, and the CSI-RS resource and the SS/PBCH resource block have the same group ID, the CSI-RS and the SS/PBCH resource block satisfy the quasi co-location relationship with respect to 'QCL-TypeD' if 'QCL-TypeD' is applied.

Case four: If an intersection between OFDM symbols occupied by an SS/PBCH resource block and a DMRS of a PDSCH received by the terminal is non-empty, and the DMRS of the PDSCH and the SS/PBCH resource block have the same group ID, the DMRS and the SS/PBCH resource block satisfy the quasi co-location relationship with respect to 'QCL-TypeD' if 'QCL-TypeD' is configured.

Case five: If the terminal is configured in a single carrier or carrier aggregation (CA) mode, an intersection between detection occasions of PDCCHs belonging to multiple CORESETs is non-empty, and these CORESETs have the same group ID, the terminal detects one of the multiple CORESETs and a PDCCH in a CORESET which satisfies QCL-TypeD with the one of the CORESETs.

The group ID is at least one of an index of a group of downlink control channel elements, an index of a group of TCI states, an index of a group of antennas, an index of a group of channels and/or signals or an index of a group of parameter values of channels and/or signals. The downlink control channel element includes one of the CORESET, the search space set, a search space or a candidate PDCCH. For example, different groups correspond to different TRPs.

When an intersection between the A types of channels and/or signals is non-empty and the A types of channels and/or signals have the same group index, the A types of channels and/or signals satisfy the quasi co-location relationship with respect to the QCL-typeD (i.e. the spatial receive parameter). It is not excluded in this embodiment that when the intersection between the A types of channels and/or signals is non-empty and the A types of channels and/or signals have the same group index, the number of reference signals included in a set composed of quasi co-location reference signals of the A types of channels and/or signals with respect to the QCL-typeD (i.e. the spatial receive parameter) is less than a third predetermined threshold, or the number of reference signals that do not satisfy the quasi co-location relationship and included in a set composed of quasi co-location reference signals of the A types of channels and/or signals with respect to the QCL-typeD (i.e. the spatial receive parameter) is less than a third predetermined threshold. For example, the terminal may emit more than one receive beam for one TRP.

When the intersection between the A types of channels and/or signals is non-empty and the A types of channels and/or signals have different group indexes, the A types of channels and/or signals do not need to satisfy the quasi co-location relationship with respect to the QCL-typeD (i.e. the spatial receive parameter), and the number of reference signals that do not satisfy the quasi co-location relationship and included in the set composed of the quasi co-location reference signals of the A types of channels and/or signals with respect to the QCL-typeD (i.e. the spatial receive parameter) is less than a fourth predetermined threshold, where the fourth threshold is greater than the third predetermined threshold. For example, the terminal may emit a predetermined number of receive beams for each TRP, and the number of receive beams that can be emitted by the terminal for two TRPs is greater than the number of receive beams that can be emitted by the terminal for one TRP.

In an embodiment, one channel and/or signal is associated with one group of downlink control channel elements, which includes at least one of cases described below.

A physical layer control channel for scheduling the channel and/or signal is transmitted in the group of downlink control channel elements.

Higher-layer signaling for scheduling the channel and/or signal is included in a downlink data channel scheduled by a control channel transmitted in the group of downlink control channel elements. For example, if an RRC/MAC-CE command for scheduling periodic or semi-persistent channels and/or signals is included in a PDCCH of a CORESET group 1, a CORESET group associated with these periodic or semi-persistent channels and/or signals is referred to as the CORESET group 1.

In an embodiment, in the preceding cases one to five, in the case where the pieces of group information associated with the A types of channels and/or signals are different, the A types of channels and/or signals do not need to satisfy the quasi co-location relationship with respect to the spatial receive parameter.

In an embodiment, in the case where the pieces of group information associated with the A types of channels and/or signals are different, at least one of characteristics described below is included.

In the case where the pieces of group information associated with the A types of channels and/or signals are different and the number of reference signals that do not satisfy the quasi co-location relationship in the set composed of the quasi co-location reference signals of the A types of channels and/or signals with respect to the spatial receive parameter is greater than G, B types of channels and/or signals among the A types of channels and/or signals are transmitted according to priorities of the pieces of group information, where B is a positive integer less than A.

In the case where the pieces of group information associated with the A types of channels and/or signals are different and the number of reference signals that do not satisfy the quasi co-location relationship in the set composed of the quasi co-location reference signals of the A types of channels and/or signals with respect to the spatial receive parameter is greater than G, B types of channels and/or signals among the A types of channels and/or signals are transmitted, where B is a positive integer less than A.

In the case where the pieces of group information associated with the A types of channels and/or signals are different and the number of reference signals that do not satisfy the quasi co-location relationship in the set composed of the quasi co-location reference signals of the A types of channels and/or signals with respect to the spatial receive parameter is less than or equal to G, the A types of channels and/or signals are transmitted.

In the case where the pieces of group information associated with the A types of channels and/or signals are the same and the number of reference signals that do not satisfy the quasi co-location relationship in the set composed of the quasi co-location reference signals of the A types of channels and/or signals with respect to the spatial receive parameter is greater than H, B types of channels and/or signals among the A types of channels and/or signals are transmitted, where B is a positive integer less than A.

In the case where the pieces of group information associated with the A types of channels and/or signals are the same and the number of reference signals that do not satisfy the quasi co-location relationship in the set composed of the quasi co-location reference signals of the A types of channels and/or signals with respect to the spatial receive parameter is less than or equal to H, the A types of channels and/or signals are transmitted.

G and H are positive integers greater than or equal to 1; and/or G is acquired according to at least one of pieces of the following information: the group of downlink control channel elements, the group of TCI states, the group of antennas, or the group of channels and/or signals; and/or H is less than G.

For example, channels and/or signals in the same group are sent by the same TRP, and channels and/or signals in different groups are sent by different TRPs.

For example, two CORESETs exist and each CORESET corresponds to one TRP. In the case where pieces of group information associated with two types of channels and/or signals are different and the number of reference signals that do not satisfy the quasi co-location relationship in a set composed of quasi co-location reference signals of the two types of channels and/or signals with respect to the spatial receive parameter is less than or equal to 2, the two types of channels and/or signals are transmitted.

For example, two CORESETs exist and each CORESET corresponds to one TRP. In the case where pieces of group information associated with two types of channels and/or signals are the same and the number of reference signals that do not satisfy the quasi co-location relationship in a set composed of quasi co-location reference signals of the two types of channels and/or signals with respect to the spatial receive parameter is greater than 1, one type of channel and/or signal of the two types of channels and/or signals is transmitted.

It is to be noted that the transmission in all parts of the specification of the present application includes sending and/or receiving and is the sending at a sending end of channels and/or signals and the receiving at a receiving end of the channels and/or signals.

In the embodiment of the present application, the pieces of group information associated with the A types of channels and/or signals are determined.

The step in which the transmission manner of the A types of channels and/or signals is determined according to the pieces of group information associated with the A types of channels and/or signals includes at least one of steps described below.

In the case where the pieces of group information associated with the A types of channels and/or signals are different and the A types of channels and/or signals do not satisfy the quasi co-location relationship with respect to the spatial receive parameter, the B types of channels and/or signals among the A types of channels and/or signals are transmitted according to the priorities of the pieces of group information, where B is a positive integer less than A. For example, a channel and/or signal whose piece of group information has a minimum index has a highest priority. For example, different pieces of group information correspond to different TRPs.

In the embodiment of the present application, when the intersection between the time domain resources occupied by the A types of channels and/or signals is non-empty, the B types of channels and/or signals among the A types of channels and/or signals are transmitted, and B is determined according to a relationship between a first predetermined value and the number of reference signals included in a reference signal set composed of the quasi co-location reference signals of the A types of channels and/or signals with respect to the spatial receive parameter. For example, when the number of reference signals included in the reference signal set composed of the quasi co-location reference signals of the A types of channels and/or signals with respect to the spatial receive parameter is greater than the first predetermined value, B is less than A or B is determined according to a relationship between the pieces of group information associated with the A types of channels and/or signals; otherwise, B is equal to A.

The first predetermined value and/or a second predetermined value is acquired according to at least one of pieces of the following information: the group of downlink control channel elements, the group of TCI states, the group of antennas or the group of channels and/or signals. For example, different pieces of group information correspond to different TRPs.

In the embodiment of the present application, when the intersection between the time domain resources occupied by the A types of channels and/or signals is non-empty, the B types of channels and/or signals among the A types of channels and/or signals are transmitted, and B is determined according to a relationship between the second predetermined value and the number of reference signals that do not satisfy the quasi co-location relationship with respect to the spatial receive parameter and included in the reference signal set composed of the quasi co-location reference signals of the A types of channels and/or signals with respect to the spatial receive parameter.

For example, when the number of reference signals that do not satisfy the quasi co-location relationship with respect to the spatial receive parameter and included in the reference signal set composed of the quasi co-location reference signals of the A types of channels and/or signals with respect to the spatial receive parameter is greater than the second predetermined value, B is less than A or B is determined according to the relationship between the pieces of group information associated with the A types of channels and/or signals; otherwise, B is equal to A.

FIG. 5 is a structure diagram of a channel measurement apparatus according to an embodiment. As shown in FIG. 5, the channel measurement apparatus provided in this embodiment includes a configuration module 51 and a sending module 52. The configuration module 51 is configured to configure measurement resource information, where the measurement resource information is used for acquiring channel state information and includes N pieces of channel measurement resource information and M pieces of interference measurement resource information, where N and M are positive integers. The sending module 52 is configured to send the measurement resource information.

The channel measurement apparatus provided in this embodiment is configured to implement the channel measurement method in the embodiment shown in FIG. 2 and has similar implementation principles and technical effects, which are not be repeated here.

FIG. 6 is a structure diagram of another channel measurement apparatus according to an embodiment. As shown in FIG. 6, the channel measurement apparatus provided in this embodiment includes a receiving module 61, a measurement module 62 and a sending module 63. The receiving module 61 is configured to receive measurement resource information, where the measurement resource information includes N pieces of channel measurement resource information and M pieces of interference measurement resource information, where N and M are positive integers. The measurement module 62 is configured to acquire channel state information according to the measurement resource information, where the channel state information includes a channel-related parameter and/or an interference-related parameter. The sending module 63 is configured to transmit the channel state information to a base station.

The channel measurement apparatus provided in this embodiment is configured to implement the channel measurement method in the embodiment shown in FIG. 4 and has similar implementation principles and technical effects, which are not be repeated here.

FIG. 7 is a structure diagram of an apparatus for determining a spatial receive parameter according to an embodiment. As shown in FIG. 7, the apparatus for determining the spatial receive parameter, which is provided in this embodiment, includes a group information determination module 71 and a parameter determination module 72. The group information determination module 71 is configured to determine pieces of group information associated with A types of channels and/or signals. The parameter determination module 72 is configured to determine, according to the determined pieces of group information associated with the A types of channels and/or signals, at least one of the following: a spatial receive parameter of at least one type of channel and/or signal of the A types of channels and/or signals, or a transmission manner of the A types of channels and/or signals. An intersection between time domain resources occupied by the A types of channels and/or signals is non-empty, and A is a positive integer greater than or equal to 2.

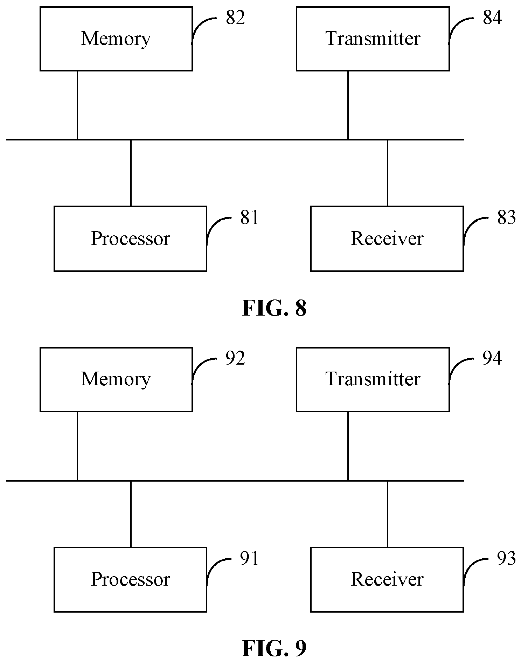

FIG. 8 is a structure diagram of a base station according to an embodiment. As shown in FIG. 8, the base station includes a processor 81, a memory 82, a receiver 83 and a transmitter 84. The number of the processors 81 in the base station may be one or more, and one processor 81 is used as an example in FIG. 8. The processor 81 and the memory 82 in the base station may be connected through a bus or in other manners. In FIG. 8, the connection through the bus is used as an example.

As a computer-readable storage medium, the memory 82 may be configured to store software programs, computer-executable programs and modules, such as program instructions/modules corresponding to the channel measurement method in the embodiment of the present application shown in FIG. 2. The processor 81 executes the software programs, instructions and modules stored in the memory 82 so that the base station performs at least one function application and data processing, that is, to perform the channel measurement method described above.

The memory 82 may mainly include a program storage region and a data storage region. The program storage region may store an operating system and an application program required for at least one function, and the data storage region may store data or the like created according to the use of the base station. In addition, the memory 82 may include a high-speed random-access memory and may also include a non-volatile memory such as at least one magnetic disk memory, flash memory or other non-volatile solid-state memory.

The receiver 83 is a combination of modules or devices capable of receiving radio frequency signals from space and includes, for example, a combination of a radio frequency receiver, an antenna and another device. The transmitter 84 is a combination of modules or devices capable of transmitting radio frequency signals into space and includes, for example, a combination of a radio frequency transmitter, an antenna and another device.

FIG. 9 is a structure diagram of a terminal according to an embodiment. As shown in FIG. 9, the terminal includes

**EP 3 965 310 B1**

a processor 91, a memory 92, a receiver 93 and a transmitter 94. The number of the processors 91 in the terminal may be one or more, and one processor 91 is used as an example in FIG. 9. The processor 91 and the memory 92 in the terminal may be connected through a bus or in other manners. In FIG. 9, the connection through the bus is used as an example.

As a computer-readable storage medium, the memory 92 may be configured to store software programs, computer-executable programs and modules, such as program instructions/modules corresponding to the channel measurement method in the embodiment of the present application shown in FIG. 4. The processor 91 executes the software programs, instructions and modules stored in the memory 92 so that the terminal performs at least one function application and data processing, that is, to perform the channel measurement method described above.

The memory 92 may mainly include a program storage region and a data storage region. The program storage region may store an operating system and an application program required for at least one function, and the data storage region may store data or the like created according to the use of the terminal. In addition, the memory 92 may include a high-speed random-access memory and may also include a non-volatile memory such as at least one magnetic disk memory, flash memory or other non-volatile solid-state memory.

The receiver 93 is a combination of modules or devices capable of receiving radio frequency signals from space and includes, for example, a combination of a radio frequency receiver, an antenna and another device. The transmitter 94 is a combination of modules or devices capable of transmitting radio frequency signals into space and includes, for example, a combination of a radio frequency transmitter, an antenna and another device.

An embodiment of the present application further provides a storage medium including computer-executable instructions, where the computer-executable instructions are used for performing a channel measurement method when executed by a computer processor. The method includes: configuring measurement resource information, where the measurement resource information is used for acquiring channel state information and includes N pieces of channel measurement resource information and M pieces of interference measurement resource information, where N and M are positive integers; and sending the measurement resource information.

An embodiment of the present application further provides a storage medium including computer-executable instructions, where the computer-executable instructions are used for performing a channel measurement method when executed by a computer processor. The method includes: receiving measurement resource information, where the measurement resource information includes N pieces of channel measurement resource information and M pieces of interference measurement resource information, where N and M are positive integers; acquiring channel state information according to the measurement resource information, where the channel state information includes a channel-related parameter and/or an interference-related parameter; and transmitting the channel state information to a base station.

It is to be understood by those skilled in the art that the term terminal encompasses any suitable type of wireless user device such as a mobile phone, a portable data processing device, a portable web browser or a vehicle-mounted mobile station.

Generally, various embodiments of the present application may be implemented in hardware, application-specific circuitry, software, logics or any combination thereof. For example, some aspects may be implemented in hardware while other aspects may be implemented in firmware or software executable by a controller, a microprocessor or other computing devices, although the present application is not limited thereto.

The embodiments of the present application may be implemented through the execution of computer program instructions by a data processor of a mobile device, for example, implemented in a processor entity, hardware or a combination of software and hardware. The computer program instructions may be assembly instructions, instruction set architecture (ISA) instructions, machine instructions, machine-related instructions, microcodes, firmware instructions, state setting data or source or object codes written in any combination of one or more programming languages.

A block diagram of any logic flow among the drawings of the present application may represent program steps, or may represent interconnected logic circuits, modules and functions, or may represent a combination of program steps and logic circuits, modules and functions. Computer programs may be stored on a memory. The memory may be of any type suitable for a local technical environment and may be implemented using any suitable data storage technology, such as, but not limited to, a read-only memory (ROM), a random-access memory (RAM) and an optical memory device and system (digital video disc (DVD) or compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application specific integrated circuit (ASIC), a field-programmable gate array (FPGA) and a processor based on multi-core processor architecture.

**Claims**

**1.** A channel measurement method performed by a terminal device, comprising:

receiving, by the terminal device, measurement resource information from a base station, wherein the measurement resource information comprises N sets of channel measurement resources and M sets of interference measurement resources, wherein N and M are positive integers, wherein a channel measurement resource includes a synchronization signal block, SSB, resource, wherein each SSB resource in the N sets of channel measurement resources is associated with an interference measurement resource in the M sets of interference measurement resources;

wherein identifiers of channel measurement resources in the N sets and identifiers of interference measurement resources in the M sets are ordered, and wherein each channel measurement resource in the N sets of channel measurement resources has a one-to-one association with a corresponding interference measurement resource in the M sets of interference measurement resources according to an order of the identifiers of channel measurement resources and the identifiers of interference measurement resources;

acquiring, by the terminal device, channel state information according to the measurement resource information by assuming that the channel measurement resource and the associated interference measurement resource have a same quasi co-location type; and

transmitting, by the terminal device, the channel state information to the base station, wherein the channel state information includes at least one L1-signal-to-interference-plus-noise ratio, L1-SINR, and at least one differential L1-SINR jointly encoded in one block, wherein a value of each L1-SINR is indicated by 7 bits and a value of each differential L1-SINR is indicated by 4 bits.

2. The method of claim 1, wherein the interference measurement resources include a channel state information-interference measurement, CSI-IM, resource or a non-zero power channel state information-reference signal, NZP-CSI-RS, resource.

3. The method of any one of claims 1 to 2, wherein each of the N sets of channel measurement resource information comprises a repetition parameter that is on or off and each of the M sets of interference measurement resources comprises a repetition parameter that is on or off.

4. The method of any one of claims 1 to 3, wherein the channel state information includes a channel-related parameter and an interference-related parameter that are jointly encoded in one encoding block.

5. A method for obtaining channel measurement performed by a base station, comprising:

transmitting, by the base station, measurement resource information to a terminal device, wherein the measurement resource information comprises N sets of channel measurement resources and M sets of interference measurement resources, wherein N and M are positive integers, wherein a channel measurement resource includes a synchronization signal block, SSB, resource, wherein each SSB resource in the N sets of channel measurement resources is associated with an interference measurement resource in the M sets of interference measurement resources;

wherein identifiers of channel measurement resources in the N sets and identifiers of interference measurement resources in the M sets are ordered, and wherein each channel measurement resource in the N sets of channel measurement resources has a one-to-one association with a corresponding interference measurement resource in the M sets of interference measurement resources according to an order of the identifiers of channel measurement resources and the identifiers of interference measurement resources; and

receiving, by the base station, channel state information acquired by the terminal device according to the measurement resource information, wherein the channel measurement resource and the associated interference measurement resource are assumed to have a same quasi co-location type, wherein the channel state information includes at least one L1-signal-to-interference-plus-noise ratio, L1-SINR, and at least one differential L1-SINR jointly encoded in one block, wherein a value of each L1-SINR is indicated by 7 bits and a value of each differential L1-SINR is indicated by 4 bits.

6. The method of claim 5, wherein the interference measurement resources include a channel state information-interference measurement, CSI-IM, resource or a non-zero power channel state information-reference signal, NZP-CSI-RS, resource.

7. The method of claim 5 or 6, wherein each of the N sets of channel measurement resources comprises a repetition parameter that is on or off and each of the M sets of interference measurement resources comprises a repetition parameter that is on or off.

**8.** The method of any of claims 5 to 7, wherein the channel state information includes a channel-related parameter and an interference-related parameter that are jointly encoded in one encoding block.

**9.** A communication apparatus, comprising a processor (81, 91) configured to implement the method recited in any of claims 1 to 8.

**10.** A computer program product comprising instructions which, when the program is executed by a computer, cause the computer to carry out the method recited in any of claims 1 to 8.

**Patentansprüche**

**1.** Kanalmessverfahren, das durch ein Endgerät durchgeführt wird, umfassend:

Empfangen von Messressourceinformationen von einer Basisstation durch das Endgerät, wobei die Messressourceinformationen N Sätze von Kanalmessressourcen und M Sätze von Interferenzmessressourcen umfassen, wobei N und M positive ganze Zahlen sind, wobei eine Kanalmessressource eine Synchronisationssignalblockressource, SSB-Ressource, einschließt, wobei jede SSB-Ressource in den N Sätzen von Kanalmessressourcen einer Interferenzmessressource in den M Sätzen von Interferenzmessressourcen zugeordnet ist; wobei Kennungen von Kanalmessressourcen in den N Sätzen und Kennungen von Interferenzmessressourcen in den M Sätzen geordnet sind, und wobei jede Kanalmessressource in den N Sätzen von Kanalmessressourcen eine Eins-zu-eins-Zuordnung zu einer entsprechenden Interferenzmessressource in den M Sätzen von Interferenzmessressourcen gemäß einer Reihenfolge der Kennungen von Kanalmessressourcen und der Kennungen von Interferenzmessressourcen aufweist; Erfassen von Kanalzustandsinformationen durch das Endgerät gemäß den Messressourceinformationen unter der Annahme, dass die Kanalmessressource und die zugeordnete Interferenzmessressource denselben Quasi-Kolokalisierungstyp aufweisen; und Übertragen der Kanalzustandsinformationen durch das Endgerät an die Basisstation, wobei die Kanalzustandsinformationen mindestens ein L1-Signal-zu-Interferenz-plus-Rausch-Verhältnis, L1-SINR, und mindestens ein Differential-L1-SINR einschließen, die gemeinsam in einem Block codiert sind, wobei ein Wert jedes L1-SINR durch 7 Bits angegeben wird und ein Wert jedes Differential-L1-SINR durch 4 Bits angegeben wird.

**2.** Verfahren nach Anspruch 1, wobei die Interferenzmessressourcen eine Kanalzustandsinformations-Interferenzmessressource, CSI-IM-Ressource, oder eine Nicht-Null-Leistungskanalzustandsinformations-Referenzsignalressource, NZP-CSI-RS-Ressource, einschließen.

**3.** Verfahren nach einem der Ansprüche 1 bis 2, wobei jeder der N Sätze von Kanalmessressourceinformationen einen Wiederholungsparameter umfasst, der ein- oder ausgeschaltet ist, und jeder der M Sätze von Interferenzmessressourcen einen Wiederholungsparameter umfasst, der ein- oder ausgeschaltet ist.

**4.** Verfahren nach einem der Ansprüche 1 bis 3, wobei die Kanalzustandsinformationen einen kanalbezogenen Parameter und einen interferenzbezogenen Parameter umfassen, die gemeinsam in einem Codierblock codiert sind.

**5.** Verfahren zum Erhalten einer durch eine Basisstation durchgeführten Kanalmessung, umfassend:

Übertragen von Messressourceinformationen durch die Basisstation an ein Endgerät, wobei die Messressourceinformationen N Sätze von Kanalmessressourcen und M Sätze von Interferenzmessressourcen umfassen, wobei N und M positive ganze Zahlen sind, wobei eine Kanalmessressource eine Synchronisationssignalblockressource, SSB-Ressource, einschließt, wobei jede SSB-Ressource in den N Sätzen von Kanalmessressourcen einer Interferenzmessressource in den M Sätzen von Interferenzmessressourcen zugeordnet ist; wobei Kennungen von Kanalmessressourcen in den N Sätzen und Kennungen von Interferenzmessressourcen in den M Sätzen geordnet sind und wobei jede Kanalmessressource in den N Sätzen von Kanalmessressourcen eine Eins-zu-eins-Zuordnung zu einer entsprechenden Interferenzmessressource in den M Sätzen von Interferenzmessressourcen gemäß einer Reihenfolge der Kennungen von Kanalmessressourcen und der Kennungen von Interferenzmessressourcen aufweist; und

Empfangen von Kanalzustandsinformationen durch die Basisstation, die durch das Endgerät gemäß den Messressourceinformationen erfasst wurden, wobei angenommen wird, dass die Kanalmessressource und die zugeordnete Interferenzmessressource denselben Quasi-Kolokalisierungstyp aufweisen, wobei die Kanalzustandsinformationen mindestens ein L1-Signal-zu-Interferenz-plus-Rausch-Verhältnis, L1-SINR, und mindestens ein Differential-L1-SINR einschließen, die gemeinsam in einem Block codiert sind, wobei ein Wert jedes L1-SINR durch 7 Bits angegeben wird und ein Wert jedes Differential-L1-SINR durch 4 Bits angegeben wird.

**6.** Verfahren nach Anspruch 5, wobei die Interferenzmessressourcen eine Kanalzustandsinformations-Interferenzmessressource, CSI-IM-Ressource, oder eine Nicht-Null-Leistungskanalzustandsinformations-Referenzsignalressource, NZP-CSI-RS-Ressource, einschließen.

**7.** Verfahren nach Anspruch 5 oder 6, wobei jeder der N Sätze von Kanalmessressourcen einen Wiederholungsparameter umfasst, der ein- oder ausgeschaltet ist, und jeder der M Sätze von Interferenzmessressourcen einen Wiederholungsparameter umfasst, der ein- oder ausgeschaltet ist.

**8.** Verfahren nach einem der Ansprüche 5 bis 7, wobei die Kanalzustandsinformationen einen kanalbezogenen Parameter und einen interferenzbezogenen Parameter umfassen, die gemeinsam in einem Codierblock codiert sind.

**9.** Kommunikationseinrichtung, umfassend einen Prozessor (81, 91), der konfiguriert ist, um das in einem der Ansprüche 1 bis 8 beschriebene Verfahren zu implementieren.

**10.** Computerprogrammprodukt, umfassend Anweisungen, die, wenn das Programm durch einen Computer ausgeführt wird, den Computer veranlassen, das in einem der Ansprüche 1 bis 8 beschriebene Verfahren auszuüben.

**Revendications**

**1.** Procédé de mesure de canal effectué par un dispositif terminal, comprenant :

la réception, par le dispositif terminal, d'informations de ressource de mesure à partir d'une station de base, dans lequel les informations de ressource de mesure comprennent N ensembles de ressources de mesure de canal et M ensembles de ressources de mesure d'interférence, dans lequel N et M sont des nombres entiers positifs, dans lequel une ressource de mesure de canal comporte une ressource de bloc de signal de synchronisation, SSB, dans lequel chaque ressource SSB dans les N ensembles de ressources de mesure de canal est associée à une ressource de mesure d'interférence dans les M ensembles de ressources de mesure d'interférence ;
dans lequel des identifiants de ressources de mesure de canal dans les N ensembles et des identifiants de ressources de mesure d'interférence dans les M ensembles sont ordonnés, et dans lequel chaque ressource de mesure de canal dans les N ensembles de ressources de mesure de canal a une association biunivoque avec une ressource de mesure d'interférence correspondante dans les M ensembles de ressources de mesure d'interférence selon un ordre des identifiants de ressources de mesure de canal et des identifiants de ressources de mesure d'interférence ;
l'acquisition, par le dispositif terminal, d'informations d'état de canal selon les informations de ressource de mesure, en supposant que la ressource de mesure de canal et la ressource de mesure d'interférence associée ont un même type de quasi-colocalisation ; et
la transmission, par le dispositif terminal, des informations d'état de canal à la station de base, dans lequel les informations d'état de canal comportent au moins un rapport signal sur interférence plus bruit de couche 1, L1-SINR, et au moins un L1-SINR différentiel codés conjointement dans un seul bloc, dans lequel une valeur de chaque L1-SINR est indiquée par 7 bits et une valeur de chaque L1-SINR différentiel est indiquée par 4 bits.

**2.** Procédé selon la revendication 1, dans lequel les ressources de mesure d'interférence comportent une ressource de mesure d'interférence d'informations d'état de canal, CSI-IM, ou une ressource de signal de référence d'informations d'état de canal de puissance non nulle, NZP-CSI-RS.

**3.** Procédé selon l'une quelconque des revendications 1 à 2, dans lequel chacun des N ensembles d'informations de ressource de mesure de canal comprend un paramètre de répétition activé ou désactivé et chacun des M ensembles de ressources de mesure d'interférence comprend un paramètre de répétition activé ou désactivé.

**4.** Procédé selon l'une quelconque des revendications 1 à 3, dans lequel les informations d'état de canal comportent un paramètre lié au canal et un paramètre lié à l'interférence qui sont codés conjointement dans un seul bloc de codage.

**5.** Procédé permettant d'obtenir une mesure de canal effectuée par une station de base, comprenant : la transmission, par la station de base, d'informations de ressource de mesure à un dispositif terminal,

dans lequel les informations de ressource de mesure comprennent N ensembles de ressources de mesure de canal et M ensembles de ressources de mesure d'interférence, dans lequel N et M sont des nombres entiers positifs, dans lequel une ressource de mesure de canal comporte une ressource de bloc de signal de synchronisation, SSB, dans lequel chaque ressource SSB dans les N ensembles de ressources de mesure de canal est associée à une ressource de mesure d'interférence dans les M ensembles de ressources de mesure d'interférence ;

dans lequel des identifiants de ressources de mesure de canal dans les N ensembles et des identifiants de ressources de mesure d'interférence dans les M ensembles sont ordonnés, et dans lequel chaque ressource de mesure de canal dans les N ensembles de ressources de mesure de canal a une association biunivoque avec une ressource de mesure d'interférence correspondante dans les M ensembles de ressources de mesure d'interférence selon un ordre des identifiants de ressources de mesure de canal et des identifiants de ressources de mesure d'interférence ; et

la réception, par la station de base, d'informations d'état de canal acquises par le dispositif terminal selon les informations de ressource de mesure, dans lequel la ressource de mesure de canal et la ressource de mesure d'interférence associée sont supposées avoir un même type de quasi-colocalisation, dans lequel les informations d'état de canal comportent au moins un rapport signal sur interférence plus bruit de couche 1, L1-SINR, et au moins un L1-SINR différentiel codés conjointement dans un seul bloc, dans lequel une valeur de chaque L1-SINR est indiquée par 7 bits et une valeur de chaque L1-SINR différentiel est indiquée par 4 bits.

**6.** Procédé selon la revendication 5, dans lequel les ressources de mesure d'interférence comportent une ressource de mesure d'interférence d'informations d'état de canal, CSI-IM, ou une ressource de signal de référence d'informations d'état de canal de puissance non nulle, NZP-CSI-RS.

**7.** Procédé selon la revendication 5 ou 6, dans lequel chacun des N ensembles de ressources de mesure de canal comprend un paramètre de répétition activé ou désactivé et chacun des M ensembles de ressources de mesure d'interférence comprend un paramètre de répétition activé ou désactivé.

**8.** Procédé selon l'une quelconque des revendications 5 à 7, dans lequel les informations d'état de canal comportent un paramètre lié au canal et un paramètre lié à l'interférence qui sont codés conjointement dans un seul bloc de codage.

**9.** Appareil de communication, comprenant un processeur (81, 91) configuré pour mettre en œuvre le procédé selon l'une quelconque des revendications 1 à 8.

**10.** Produit-programme informatique comprenant des instructions qui, lorsque le programme est exécuté par un ordinateur, amènent l'ordinateur à réaliser le procédé selon l'une quelconque des revendications 1 à 8.

**FIG. 1**

**FIG. 2**

**FIG. 3**

| Receive measurement resource information, where the measurement resource information includes N pieces of channel measurement resource information and M pieces of interference measurement resource information, where N and M are positive integers | S4010 |

↓

| Acquire channel state information according to the measurement resource information, where the channel state information includes a channel-related parameter and/or an interference-related parameter | S4020 |

↓

| Transmit the channel state information to a base station | S4030 |

**FIG. 4**

| Configuration module | 51 | Sending module | 52 |

**FIG. 5**

| Receiving module | 61 | Measurement module | 62 | Sending module | 63 |

**FIG. 6**

| Group information determination module | 71 | Parameter determination module | 72 |

**FIG. 7**

| Memory | ⌐ 82 |
|---|---|

| Transmitter | ⌐ 84 |
|---|---|

| Processor | ⌐ 81 |
|---|---|

| Receiver | ⌐ 83 |
|---|---|

**FIG. 8**

| Memory | ⌐ 92 |
|---|---|

| Transmitter | ⌐ 94 |
|---|---|

| Processor | ⌐ 91 |
|---|---|

| Receiver | ⌐ 93 |
|---|---|

**FIG. 9**